# EUROPEAN PATENT SPECIFICATION

(11) **EP 2 818 008 B1**
(45) Date of publication and mention of the grant of the patent: **15.02.2017**
(21) Application number: 13751688.6
(22) Date of filing: 25.02.2013
(51) Int. Cl.: H04W 52/00, H04W 74/04, H04W 84/12

(54) **SYSTEM AND METHOD FOR SCHEDULING COMMUNICATIONS**
SYSTEM UND VERFAHREN ZUR PLANUNG VON KOMMUNIKATIONEN
SYSTÈME ET PROCÉDÉ DE PLANIFICATION DE COMMUNICATIONS

(30) Priority: 23.02.2012 US 201261602254 P; 19.02.2013 US 201313770886
(43) Date of publication of application: 31.12.2014
(73) Proprietor: Huawei Technologies Co., Ltd., Shenzhen, Guangdong 518129 (CN)
(72) Inventor: ABOUL-MAGD, Osama, Kanata, California (US); AU, Kwok Shum, Shenzhen Guangdong 518129 (CN)
(74) Representative: Epping - Hermann - Fischer
(86) International application number: PCT/CN2013/071845
(87) International publication number: WO 2013/123908

(56) References cited:
- CN-A- 1 592 266
- CN-A- 101 668 044
- CN-A- 102 076 067
- US-A1- 2004 157 637
- US-A1- 2004 264 397
- US-A1- 2005 018 624
- US-A1- 2005 036 475
- US-A1- 2007 097 867
- Godgrey Tan: "Self Organizing Bluetooth scatternets", , 1 January 1999 (1999-01-01), XP055031687, Retrieved from the Internet: URL:http://maas.csail.mit.edu/papers/tan-m s-thesis.pdf [retrieved on 2012-07-03]

## Description

### FIELD OF INVENTION

The present disclosure relates generally to digital communications, and more particularly to a system and method for scheduling communications.

### BACKGROUND

Due to popularity, wireless local area network (WLAN) networks based on IEEE 802.11 technology, also commonly referred to as WiFi, are currently witnessing a transformation. This transformation will allow WLAN networks to support applications that are traditionally not being supported by WLAN. One example is transporting sensor information (e.g., smart meter information) to control centers in smart-grid applications.

Most sensors are battery operated, so power saving generally is a significant design issue. Furthermore the number of sensors in a single WLAN basic service set (BSS) is expected to reach into the few thousands. The current WLAN medium access control (MAC) mechanism, however, is based on contention that generally is not suited for either power saving or a large number of stations.

US 2007/0097867 A1 provides a new data transmission schedule in a wireless network. Wherein, a first station may transmit data according to a first data transmission schedule, and may transmit a request for a second data transmission schedule change if encountering significant interference or collisions on the channel while transmitting during the scheduled service periods for the first schedule (see pars. [0005]-[0006]).

US 2004/157637 A1 provides a method of coordinating a transit link between network nodes in a wireless communication network, wherein a master network node and a slave network node is set for the transit link, a rendezvous time between the master network node and the salve node is set, and the master network node sends a rendezvous signal to the slave network node via transit link at the rendezvous time (see pars. [0026] and [0028]).

Godgrey Tan: "Self Organization Bluetooth Scatternets", 1 January 1999, XP055031687", introduces a scheduling algorithm, TSS (Tree Scatternet Scheduling), which coordinates communication among neighbors nodes, and is based on the concept of scheduled meetings or appointments. End nodes on a particular link meet according to their appointment, exchange data during the meeting, and schedule their next meeting before the meeting is terminated (see section 3.2).

US 2005/018624 A1 relates to power saving methods for wireless devices (See par. [0002]), wherein a power save (PS) 802.11 station notifies its parent AP that it is an automatic power-save delivery (APSD) mode, and wherein the AP sends frames to the station when it determines that the station is in a "wake up" state, otherwise buffers downlink frames for the station when the station is in a "doze" state (see par. [0018]).

### SUMMARY

Example embodiments of the present disclosure which provide a system and method for scheduling communications.
In accordance with an example embodiment of the present disclosure, a method for operating a station is provided. The method includes scheduling, by the station, a first appointment for communicating with an access point at a first time. The method also includes entering, by the station, a sleep mode after the scheduling the first appointment; awakening, by the station, from the sleep mode prior to the first time in accordance with the scheduled first appointment; receiving, by the station, a synch frame, wherein the synch frame is a synchronization frame and is transmitted by the access point after the awakening of the station and prior to the first time; and synchronizing, by the station, a station clock of the station with a clock of the access point in accordance with the synch frame; and communicating, by the station, with the access point during the first appointment.
In accordance with another example embodiment of the present disclosure, a method for operating an access point is provided. The method includes scheduling, by the access point, a first appointment for a station to communicate with the access point at a first time. The method also includes transmitting, by the access point, a synch frame for the station to synchronize a station clock with an access point clock, wherein the synch frame is a synchronization frame and is transmitted after a time when the station awakens from a sleep mode and prior to the first time; and communicating, by the access point, with the station during the first appointment.

In accordance with another example embodiment of the present disclosure, a station is provided. The station includes a processor, and a transmitter and a receiver operatively coupled to the processor. The processor schedules a first appointment for communicating with an access point at a first time, puts the station in a sleep mode after the first appointment is scheduled, awakens the station from the sleep mode prior to the first time in accordance with the scheduled first appointment, and the receiver receives a synch frame, which is a synchronization frame and is transmitted by the access point after the awakening of the station and prior to the first time, and the processor synchronizes a station clock of the station with a clock of the access point in accordance with the synch frame and wherein the transmitter and the receiver communicate with the access point in accordance with the first appointment.
In accordance with another example embodiment of the present disclosure, an access point is provided. The access point includes a processor, and a receiver and a transmitter operatively coupled to the processor. The processor schedules a first appointment for a station to communicate with the access point at a first time; the transmitter transmits a synch frame for the station to synchronize a station clock with an access point clock, wherein the synch frame is a synchronization frame and is transmitted after a time when the station awakens from a sleep mode and prior to the first time; and wherein the receiver and the transmitter communicate with the station during the first appointment.

One advantage of an embodiment is that scheduling communications a priori helps to reduce contention for a communications medium, thereby permitting a larger number of stations access to the communications medium.

A further advantage of an embodiment is that reducing contention helps to reduce power consumption in stations. For power constrained stations, such as battery powered stations, reducing power consumption helps to increase battery life, enable the use of smaller and less expensive batteries, and the like.

### BRIEF DESCRIPTION OF THE DRAWINGS

For a more complete understanding of the present disclosure, and the advantages thereof, reference is now made to the following descriptions taken in conjunction with the accompanying drawing, in which:
Figure 1 illustrates an example communications system according to example embodiments described herein;
Figure 2 illustrates an example of transmissions occurring between an access point and a station according to example embodiments described herein;
Figure 3a illustrates example transmissions occurring between an access point and a station and an appointment setup occurring during an association operation according to example embodiments described herein;
Figure 3b illustrates example transmissions occurring between an access point and a station and an appointment setup occurring after the station obtains ownership of the communications medium according to example embodiments described herein;
Figure 4a illustrates example transmissions occurring between an access point and a station where an appointment setup is initiated by the station according to example embodiments described herein;
Figure 4b illustrates example transmissions occurring between an access point and a station where an appointment setup is initiated by the access point according to example embodiments described herein;
Figure 5 illustrates example transmissions between an access point and a plurality of stations with appointments according to example embodiments described herein;
Figure 6a illustrates an example flow diagram of operations in an access point as the access point communicates with a station to setup an appointment and during the appointment according to example embodiments described herein;
Figure 6b illustrates an example flow diagram of operations in a station as the station communicates with an access point to setup an appointment and during the appointment according to example embodiments described herein;
Figures 7a and 7b illustrate example flow diagrams of operations in an access point as the access point participates in an appointment setup with a station according to example embodiments described herein;
Figure 7c illustrates an example flow diagram of operations in an access point as the access point helps to synchronize a station according to example embodiments described herein;
Figures 8a and 8b illustrate example flow diagrams of operations in a station as the station participates in an appointment setup with an access point according to example embodiments described herein;
Figure 8c illustrates an example flow diagram of operations in a station as the station synchronizes with an access point according to example embodiments described herein;
Figure 9 illustrates an example first communications device according to example embodiments described herein; and
Figure 10 illustrates an example second communications device according to example embodiments described herein.

### DETAILED DESCRIPTION

The operating of the current example embodiments and the structure thereof are discussed in detail below. It should be appreciated, however, that the present disclosure provides many applicable inventive concepts that can be embodied in a wide variety of specific contexts. The specific embodiments discussed are merely illustrative of specific structures of the disclosure and ways to operate the disclosure, and do not limit the scope of the disclosure.

One embodiment of the disclosure relates to scheduling communications. For example, at a station, the station schedules a first appointment with an access point for a first time when the station will have ownership of a communications medium used by the station to communicate with the access point, and transmits a message to the access point in accordance with the first appointment. As another example, at an access point, the access point schedules a first appointment with a station for a first time when the station will have ownership of a communications medium used by the station to communicate with the access point, and receives a message from the station in accordance with the first appointment.

The present disclosure will be described with respect to example embodiments in a specific context, namely an IEEE 802.11 ah compliant communications system that supports simplified, battery powered devices. The disclosure may also be applied, however, to other communications systems, both standards compliant and non-standards compliant, that support simplified, battery powered devices.

Recently, a new IEEE 802.11 task group, TGah, has been formed to prepare specifications for under 1 GHz WiFi. WiFi operating in sub 1 GHz bands as specified by TGah is mainly targeted towards sensor networks with traffic offloading from cellular networks being a secondary usage scenario. A requirement for the specifications is to support more than 6000 stations.

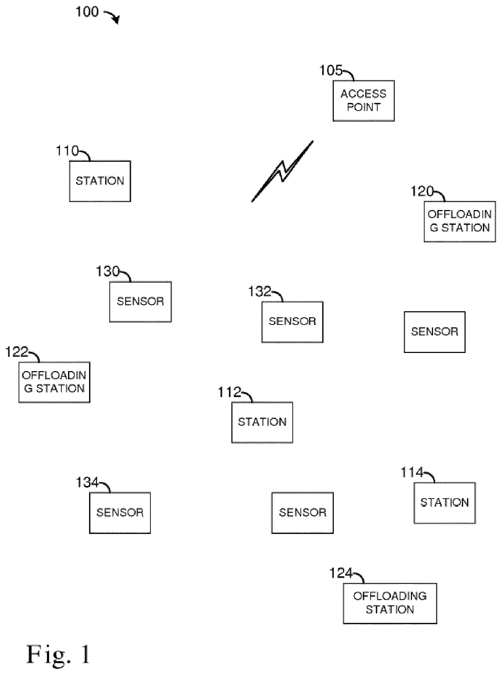

Figure 1 illustrates a communications system 100. It is noted that communications system 100 may also be referred to as a BSS. Communications system 100 may be compliant to technical specifications as specified by TGah. Communications system 100 includes an access point (AP) 105 serving a plurality of stations. The plurality of stations may include typical stations, such as stations 110 through 114, and may include personal computers, laptops, tablets, multi-media servers, and the like. The plurality of stations may also include offloading stations, such as offloading stations 120 through 124, and may include stations that typically access services through other access networks. Examples offloading stations include cellular telephones, user equipment, and the like. The plurality of stations may also include sensors, such as sensors 130 through 134. In general, sensors are used to gather information, such as weather information, security information, position information, health information, safety information, performance information, and the like. The sensors may transmit the information through access point 105 to a server or an information aggregator. The sensors may also aggregate the information prior to transmitting the information.

While it is understood that communications systems may employ multiple access points capable of communicating with a number of stations, only a limited number of access points and stations are illustrated for simplicity.

However, since sensor devices are usually battery powered, power consumption is another important consideration in sensor networks. Any additional overhead, such as communications overhead, would lead to a shorter battery life, which implies additional costs involved in battery replacement. Sensors and other stations that are power consumption sensitive may be referred to as power constrained stations. Therefore, power constrained stations tend to go into a reduced or zero power state when they are not actively communicating and/or operating in order to reduce power consumption.

In IEEE 802.11 compliant communications systems, as well as other communications systems that use carrier sense multiple access with collision avoidance (CSMA/CA), a station desiring to transmit needs to contend for ownership of a communications medium (a communications channel used by stations and access points to transmit to one another) before it can transmit. Contending for ownership of the communications medium involves sensing a state (e.g., busy or idle) of the communications medium, waiting for randomly selected and specified periods of time, and the like. Therefore, contending for ownership of the communications medium may require the station to expend a significant amount of time and power. Furthermore, contending for ownership of the communications medium may become difficult if not impossible as the number of stations contending increases.

Therefore, there is a need to permit stations to communicate without having to spend an inordinate amount of time and power in contending for ownership of the communications medium. The need is critical with power constrained stations, but is also applicable with stations that are not power constrained since these stations may take advantage of not having to contend for ownership of the communications medium. Since the example embodiments presented herein applies to both power constrained stations and non-power constrained stations, the term station may be used to refer to both power constrained stations and non-power constrained stations. The terms power constrained stations and non-power constrained stations will be used when there is a need to distinguish between the two.

According to an example embodiment, a calendar-based scheduling technique may be used to schedule an appointment(s) for transmissions by stations (e.g., power constrained stations as well as non-power constrained stations) and/or access points a priori. By scheduling the appointment(s) a priori, the stations may be able to enter a reduced or zero power state to save power and then wake up prior to a time(s) associated with the appointment(s) to transmit or receive a transmission without having to contend for ownership of the communications medium. It is also noted that an appointment may refer to more than just a time when the station can transmit. An appointment may refer to other information: such as appointment duration; appointment period, interval, or frequency (for periodic appointments); appointment number (for periodic appointments); and the like.

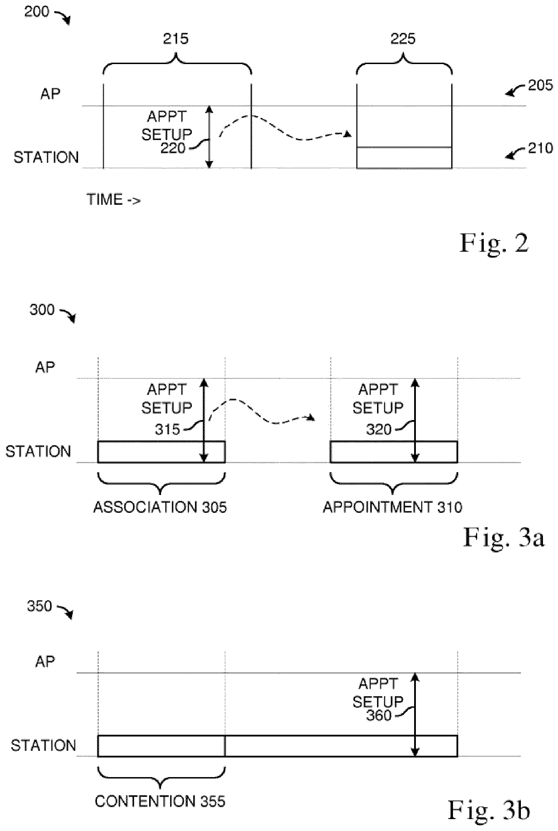

Figure 2 illustrates a diagram 200 of transmissions occurring between an access point and a station. Diagram 200 illustrates transmissions between the access point and the station as the access point and the station setup an appointment, with trace 205 illustrating transmissions made by the access point and trace 210 illustrating transmissions made by the station. It is noted that the term schedule or scheduling may be used interchangeably with setup or setting up. During a first interval 215, when the access point and the station are communicating, the access point and the station may perform what is referred to as an appointment setup (APPT SETUP) 220 (or equivalently, appointment scheduling). Appointment setup 220 may involve an exchange of one or more transmissions between the access point and the station. As an example, appointment setup 220 may include an appointment request sent from the station to the access point and an appointment response sent from the access point to the station. As another example, appointment setup 220 may include an appointment request sent from the access point to the station and an appointment response sent from the station to the access point.

As another example, the appointment response may be sent piggyback on another message. As yet another example, the appointment response may not be sent unless a conflict exists with an appointment associated with the appointment request, e.g., the time has already been assigned to another appointment involving a different station. Additional messages may be exchanged to arrive at an appointment that suits both the access point and the station.

Then, at a time associated with the appointment (shown as second interval 225), the station and the access point may be able to communicate. It is noted that if additional communications between the station and the access point is to take place, an additional appointment(s) may be setup during second interval 225.

Figure 3a illustrates a diagram 300 of transmissions occurring between an access point and a station and an appointment setup occurring during an association operation. When a station first enters a coverage area of an access point, the station and the access point perform an association operation to register the station with the access point. It may also be possible for the station to perform a re-association to re-register with the access point. During the association (or the re-association), it may be possible to setup an appointment.

As shown in diagram 300, the access point and the station may perform an appointment setup during an association 305 to setup an appointment (shown as appointment setup 315) to allow the station and the access point to communicate at a later time (shown in Figure 3a as appointment 310). Additionally, while communicating in appointment 310, the station and the access point may setup another appointment (shown as appointment setup 320) to allow the station and the access point to communicate at another later time (not shown in Figure 3a).

Figure 3b illustrates a diagram 350 of transmissions occurring between an access point and a station and an appointment setup occurring after the station obtains ownership of the communications medium. As discussed previously, a station may contend for ownership of the communications medium. While the station has ownership of the communications medium, it may be possible for the station and the access point to setup an appointment.

As shown in diagram 350, the station contends for ownership of the communications medium (shown as interval 355). Once the station has ownership of the communications medium, it may communicate with the access point. While it is still communicating with the access point, the station and the access point may setup an appointment (shown as appointment setup 360) to allow the station and the access point to communicate at a later time.

It is noted that although the appointment setups are shown in the figures as a single double ended arrow, one or more messages may actually be exchanged between the station and the access point to setup an appointment. It is also noted that although the discussion focuses on setting up a single appointment, it may be possible to setup multiple appointments within a single appointment setup. It is also noted that it is possible to setup periodic appointment, recurring appointments, and the like, during an appointment setup. It is further noted that it is possible to delete an existing appointment during an appointment setup. As an example, a station or an access point may send an appointment request with an indicator set to delete an appointment at a specified time.

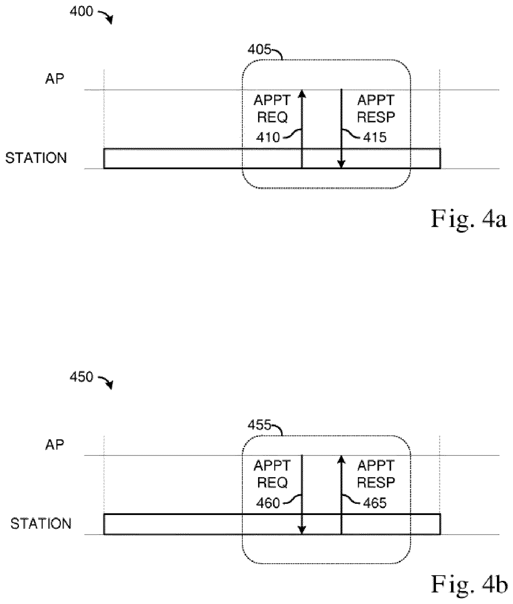

Figure 4a illustrates a diagram 400 of transmissions occurring between an access point and a station where an appointment setup 405 is initiated by the station. As discussed previously, an appointment setup may be initiated by a station. As shown in Figure 4a, appointment setup 405 may be initiated by the station when the station sends an appointment request 410 to the access point. Appointment request (APPT REQ) 410 may include a time that the appointment is to begin. Appointment request 410 may also include a duration for the appointment, and if the appointment is to be periodic, appointment request 410 may include an interval between appointments, a frequency of the appointments, a number of appointments, and the like. The access point may send back an appointment response (APPT RESP) 415 to the station. Appointment response 415 may include an affirmative response if the time for appointment requested by the station is acceptable to the access point (as well as duration, interval, frequency, number, and the like, if the appointment is to be a repetitive appointment).

However, if the time (or duration, interval, frequency, number, and the like) are not acceptable, the access point may include in appointment response 415 an alternate time (or duration, interval, frequency, number, and the like, if the appointment is to be a repetitive appointment). If the alternate time (or duration, interval, frequency, number, and the like, if the appointment is to be a repetitive appointment) is acceptable to the station, then it may send back an appointment request that includes the alternate information provided by the access point. The access point may then send back an appointment response with an affirmative response. If the alternate time (or duration, interval, frequency, number, and the like, if the appointment is to be a repetitive appointment) is not acceptable to the station, the station may send back an appointment request with a different time (or duration, interval, frequency, number, and the like, if the appointment is to be a repetitive appointment). The appointment setup may continue until an appointment is established or a failure timer expires or a specified number of attempts have been made to setup the appointment has been met.

Alternatively, appointment request 410 may include a duration of the appointment (along with interval, frequency, number, and the like, if the appointment is to be a repetitive appointment) to the access point and the access point may send back appointment response 415 with an actual time(s) when such an appointment(s) may be fulfilled.

Figure 4b illustrates a diagram 450 of transmissions occurring between an access point and a station where an appointment setup 455 is initiated by the access point. As discussed previously, an appointment setup may be initiated by an access point. As shown in Figure 4b, appointment setup 455 may be initiated by the access point when the access point sends an appointment request 460 to the station. Appointment request 460 may include a time that the appointment is to begin. Appointment request 460 may also include a duration for the appointment, and if the appointment is to be periodic, appointment request 460 may include an interval between appointments, a frequency of the appointments, a number of appointments, and the like. The station may send back an appointment response 465 to the access point. Appointment response 465 may include an affirmative response if the time for appointment requested by the access point is acceptable to the station (as well as duration, and interval, frequency, number, and the like, if the appointment is to be a repetitive appointment).

However, if the time (or duration, interval, frequency, number, and the like) are not acceptable, the station may include in appointment response 465 an alternate time (or duration, and interval, frequency, number, and the like, if the appointment is to be a repetitive appointment). If the alternate time (or duration, and interval, frequency, number, and the like, if the appointment is to be a repetitive appointment) is acceptable to the access point, then it may send back an appointment request that includes the alternate information provided by the station. The station may then send back an appointment response with an affirmative response. If the alternate time (or duration, interval, frequency, number, and the like) is not acceptable to the access point, the access point may send back an appointment request with a different time (or duration, and interval, frequency, number, and the like, if the appointment is to be a repetitive appointment). The appointment setup may continue until an appointment is established or a failure timer expires or a specified number of attempts have been made to setup the appointment has been met.

Alternatively, appointment request 460 may include a duration of the appointment (along with interval, frequency, number, and the like, if the appointment is to be a repetitive appointment) to the station and the station may send back appointment response 465 with an actual time(s) when such an appointment(s) may be fulfilled.

The duration of the appointments may be fixed, with the same duration appointments assigned to each appointment. Fixed duration appointments may simplify the assignment of appointments and may help to alleviate problems such as time fragmentation. Alternatively, the duration of the appointments may vary. The length of variable duration appointments may be requested by an initiator of appointment setup. An actual duration of an appointment may be set in accordance to factors such as available time, service history for the station, station priority, message priority, and the like.

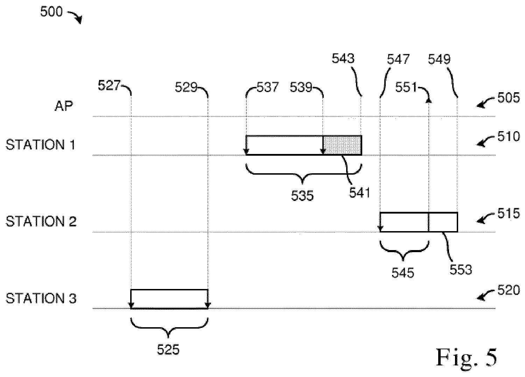

Figure 5 illustrates a diagram 500 of transmissions between an access point and a plurality of stations with appointments. A first trace 505 represents transmissions made by an access point, a second trace 510 represents transmissions made by a first station, a third trace 515 represents transmissions made by a second station, and a fourth trace 520 represents transmissions made by a third station.

As shown in Figure 5, appointments are allocated with a fixed duration (shown as interval 525 of third trace 520 between time T1 527 and time T2 529). Within interval 525, the third station and the access point can communicate. If a station has more transmissions than it can complete within the fixed duration, it may need to setup another appointment(s) in order to complete its transmissions. In second trace 510, the first station has more transmissions than it can complete (shown as interval 535) between times T3 537 and T4 539 with the extra transmissions shown as block 541, which spans times T4 539 and T5 543. In order to finish its transmission of block 541, the first station may need to setup another appointment(s). If a station has fewer transmissions than it can complete within the fixed duration, the station may terminate its appointment early and free up the communications medium for access by other stations through a contention mechanism, for example. In third trace 515, the second station has fewer transmissions than it can complete (shown as interval 545) between times T6 547 and T7 549 with its transmissions ending at time T8 551. Therefore, there is an idle time shown as block 553, which spans times T8 551 and T7 549.

While a station is in a sleep or reduced power mode, its clock may drift from a clock of the access point. If the station sleeps for an extended time, significant difference may arise in its clock and the clock of the access point. Therefore, it may be possible for the station to wake up at an incorrect time (at least relative to the access point) and miss some or all of its pending appointments. According to an example embodiment, the access point may transmit a synchronization frame (also referred to as synch frame) to help its stations synchronize their clocks with the clock of the access point. As an example, the access point may transmit a synch frame to a station a small amount of time prior to a pending appointment with the station to allow the station to synchronize its clock with the clock of the access point. The synch frame may include the time of the clock of the access point and the station can synchronize its own clock to the time of the clock of the access point. The access point keeps a record of its pending appointments with different stations in the BSS. When a pending appointment with a particular station is due, the access point may send a synchronization frame, which may be referred to as a Start frame or simply a synch frame, to the particular station who is also expected to be awake at that time. As an example, the access point may transmit the synch frame at the time corresponding to the time of the pending appointment. The particular station may synchronize its clock function with that of the access point and may start its communication with the access point by acknowledging the receipt of the synch frame.

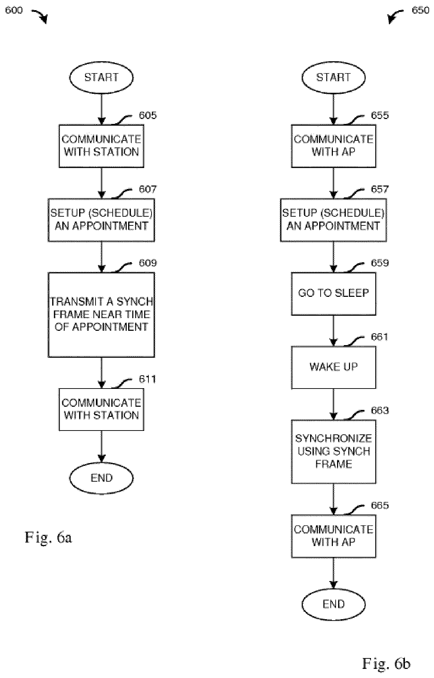

Figure 6a illustrates a flow diagram of operations 600 in an access point as the access point communicates with a station to setup an appointment and during the appointment. Operations 600 may be indicative of operations occurring in an access point, such as access point 105, as the access point communicates with a station, such as stations 110 - 134, to setup an appointment and then during the appointment.

Operations 600 may begin with the access point communicating with the station (block 605). As discussed previously, the access point may be communicating with the station during an association operation, a re-association operation, during an appointment previously setup, after the station obtains ownership of the communications medium, and the like.

While the access point and the station are communicating, the access point and the station may setup an appointment (block 607). As noted previously, the term schedule may be used in an equivalent manner as setup. Therefore, the use of the term setup should not be construed as being limiting to the scope of the embodiments. In general, the setup of the appointment may involve specifying a time for the appointment, as well as possibly a period and a number of appointments if the appointment is a periodic appointment. As described previously, setting up an appointment may involve one of the access point and the station sending an appointment request to the other and the other responding with an appointment response. Either the appointment request or the appointment response may include an indicator that indicates that
the station has ownership of the communications medium at a time associated with the appointment. Additional messages may be exchanged to resolve conflicts if conflicts exist with appointment times, durations, periodicity, interval, number, and the like.

The access point may transmit a synch frame to the station near or at the time of (or associated with) the appointment (block 609). The synch frame may be used by the station to synchronize its clock to the clock of the access point. As discussed previously, when a pending appointment with a particular station is due, the access point may send a synch frame to the particular station who is also expected to be awake at that time. The particular station may synchronize its clock function with that of the access point and may start its communication with the access point by acknowledging the receipt of the synch frame.

The access point may communicate with the station in accordance with the appointment (block 611). At or about a time specified in the appointment, the access point may receive a transmission from the station or the access point may transmit to the station, for example. The access point and the station may also setup an additional appointment(s).

Figure 6b illustrates a flow diagram of operations 650 in a station as the station communicates with an access point to setup an appointment and during the appointment. Operations 650 may be indicative of operations occurring in a station, such as stations 110 - 134, to setup an appointment and then during the appointment.

Operations 650 may begin with the station communicating with the access point (block 655). As discussed previously, the station may be communicating with the access point during an association operation, a re-association operation, during an appointment previously setup, after the station obtains ownership of the communications medium, and the like.

While the access point and the station are communicating, the access point and the station may setup an appointment (block 657). As noted previously, the term schedule may be used in an equivalent manner as setup. Therefore, the use of the term setup should not be construed as being limiting to the scope of the embodiments. In general, the setup of the appointment may involve specifying a time for the appointment, as well as possibly a period and a number of appointments if the appointment is a periodic appointment. As described previously, setting up an appointment may involve one of the station and the access point sending an appointment request to the other and the other responding with an appointment response. Either the appointment request or the appointment response may include an indicator that indicates that the station has ownership of the communications medium at a time associated with the appointment. Additional messages may be exchanged to resolve conflicts if conflicts exist with appointment times, durations, periodicity, interval, number, and the like.

The station may go into a sleep mode or a reduced power mode (block 659). Depending on tasks that it needs to perform before a time of the appointment (or some other pending appointment) arrives, the station may enter a sleep mode or a reduced power mode to reduce power consumption. Reducing power consumption may be especially important in power constrained stations. Generally, the station may go into the sleep mode or the reduce power mode after it has setup the appointment.
The station may maintain a record of its pending appointment(s) with the access point. Accordingly, the station may wake up from the sleep mode or the reduced power mode at a pre-specified time ahead of the time of (or associated with) a pending appointment (block 661) to ensure the reception of the synch frame from the access point. The pre-specified time may be set to the short inter-frame spacing (SIFS) as defined in the IEEE 802.11 technical specifications, for example. The station wakes up in order to ensure that it does not miss the pending appointment, which may prevent it from communicating with the access point for an extended amount of time, before it can contend for ownership of the communications medium, for example.

The station may receive a synch frame and use the synch frame to synchronize its clock with the clock of the access point (block 663). Since it is possible for the clock of the station to drift while it is in the sleep mode or the reduced power mode, synchronizing to the clock of the access point may be important to help ensure that the station does not miss the pending appointment. It is noted that although its clock may have drifted and is now different from the clock of the access point, the station may elect to not adjust its own clock if the difference between the two clocks is small, smaller than a specified threshold, for example.

The station may communicate with the access point in accordance with the pending appointment (block 665). At or about a time specified in (or associated with) the pending appointment, the station may receive a transmission from the access point or the station may transmit to the access point, for example. The access point and the station may also setup an additional appointment(s).

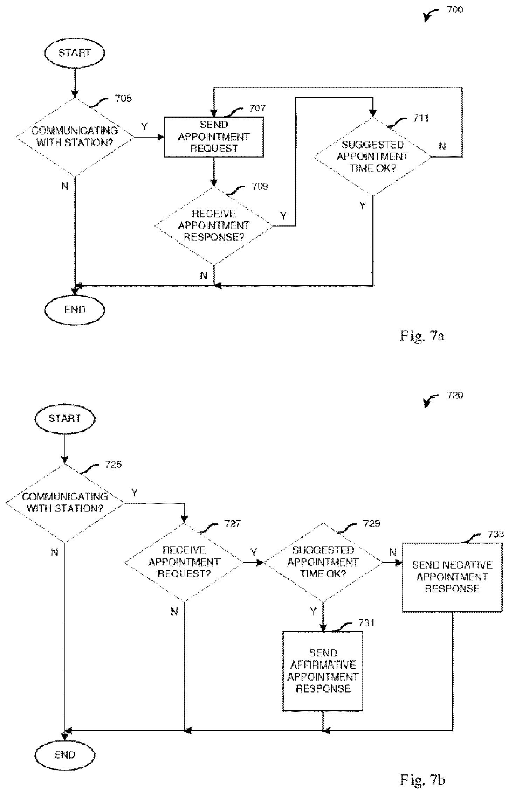

Figure 7a illustrates a flow diagram of operations 700 in an access point as the access point initiates an appointment setup. Operations 700 may be indicative of operations occurring in an access point, such as access point 105, as the access point initiates an appointment setup.

Operations 700 may begin with the access point performing a check to determine if it is communicating with a station (block 705). Generally, an appointment setup occurs when the access point is communicating with the station and if the two are not communicating, an appointment setup cannot occur. If the access point is communicating with the station, then the access point may send an appointment request to the station (block 707). As discussed previously, the appointment request may include appointment information, such as a suggested time that the appointment is to begin. The appointment request may also include other appointment information, such as a duration for the appointment. Furthermore, if the appointment is to be periodic, the appointment request may include appointment information including an interval between appointments, a frequency of the appointments, a number of appointments, and the like.

The access point may perform a check to determine if it receives an appointment response from the station (block 709). If the access point does not receive an appointment response from the station, it may wait a period of time and then give up if it does not receive an appointment response within the period of time. If the access point does receive an appointment response, the access point may perform a check to determine if the suggested time (as well as duration, and interval, frequency, number, and the like, if the appointment is to be a repetitive appointment) for the appointment is acceptable (block 711). If the suggested time (as well as duration, and interval, frequency, number, and the like, if the appointment is to be a repetitive appointment) is acceptable and hence the response is affirmative, then the appointment setup is complete. If the suggested time (as well as duration, and interval, frequency, number, and the like, if the appointment is to be a repetitive appointment) is not acceptable, then the access point may return to block 707 and repeat sending an appointment request with a different suggested time (as well as duration, and interval, frequency, number, and the like, if the appointment is to be a repetitive appointment). The access point may repeat the appointment setup process until it succeeds in setting up an appointment, until a timer expires, until it has tried a specified number of times in setting up an appointment, and the like.

Figure 7b illustrates a flow diagram of operations 720 in an access point as the access point participates in an appointment setup initiated by a station. Operations 720 may be indicative of operations occurring in an access point, such as access point 105, as the access point participates in an appointment setup initiated by a station, such as stations 110 - 134.

Operations 720 may begin with access point performing a check to determine if it is communicating with a station (block 725). If the access point is communicating with the station, then the access point may perform a check to determine if it has received an appointment request from the station (block 727). As discussed previously, the appointment request may include a suggested time that the appointment is to begin. The appointment request may also include a duration for the appointment. Furthermore, if the appointment is to be periodic, the appointment request may include an interval between appointments, a frequency of the appointments, a number of appointments, and the like.

The access point may perform a check to determine if the suggested time (as well as duration, and interval, frequency, number, and the like, if the appointment is to be a repetitive appointment) is acceptable (block 729). If the suggested time (as well as duration, and interval, frequency, number, and the like, if the appointment is to be a repetitive appointment) is acceptable, the access point may send an affirmative appointment response (block 735). If the suggested time (as well as duration, and interval, frequency, number, and the like, if the appointment is to be a repetitive appointment) is not acceptable, the access point may send a negative appointment response (block 733). It is noted that in a variant of the example embodiment, the access point may send back an alternate to the suggested time (or duration, and interval, frequency, number, and the like, if the appointment is to be a repetitive appointment) in its appointment response.

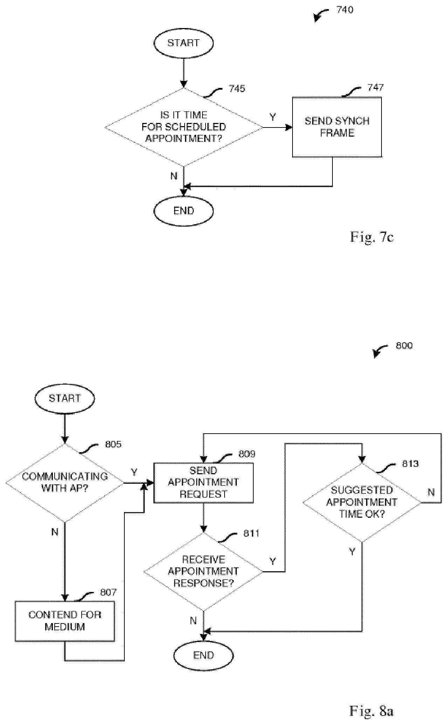

Figure 7c illustrates a flow diagram of operations 740 in an access point as the access point helps to synchronize a station. Operations 740 may be indicative of operations occurring in an access point, such as access point 105, as the access point helps to synchronize a clock of a station, such as stations 110 - 134.

Operations 740 may begin with the access point performing a check to determine if it is approaching the time for an appointment with the station (block 745). If it is approaching the time for an appointment with the station, the access point may send a synch frame to the station (block 747). The synch frame includes timing information, such as a time of the access point's clock, that may be used by the station to synchronize its own clock to that of the access point's clock.

Figure 8a illustrates a flow diagram of operations 800 in a station as the station initiates an appointment setup. Operations 800 may be indicative of operations occurring in a station, such as stations 110 - 134, as the station initiates an appointment setup.

Operations 800 may begin with the station performing a check to determine if it is communicating with an access point (block 805). Generally, an appointment setup occurs when the station is communicating with the access point and if the two are not communicating, an appointment setup cannot occur. If the station is not communicating with the access point, the station may contend for ownership of the communications medium so that it can communicate with the access point (block 807).

If the station is communicating with the access point or as the station is able to obtain ownership of the communications medium, then the station may send an appointment request to the access point (block 809). As discussed previously, the appointment request may include appointment information, such as a suggested time that the appointment is to begin. The appointment request may also include other appointment information, such as a duration for the appointment. Furthermore, if the appointment is to be periodic, the appointment request may include appointment information including an interval between appointments, a frequency of the appointments, a number of appointments, and the like.

The station may perform a check to determine if it receives an appointment response from the access point (block 811). If the station does not receive an appointment response from the access point, it may wait a period of time and then give up if it does not receive an appointment response within the period of time. If the station does receive an appointment response, the station may perform a check to determine if the suggested time (as well as duration, and interval, frequency, number, and the like, if the appointment is to be a repetitive appointment) for the appointment is acceptable (block 813). If the suggested time (as well as duration, and interval, frequency, number, and the like, if the appointment is to be a repetitive appointment) is acceptable and hence the response is affirmative, then the appointment setup is complete. If the suggested time (as well as duration, and interval, frequency, number, and the like, if the appointment is to be a repetitive appointment) is not acceptable, then the station may return to block 809 and repeat sending an appointment request with a different suggested time (as well as duration, and interval, frequency, number, and the like, if the appointment is to be a repetitive appointment). The station may repeat the appointment setup process until it succeeds in setting up an appointment, until a timer expires, until it has tried a specified number of times in setting up an appointment, and the like.

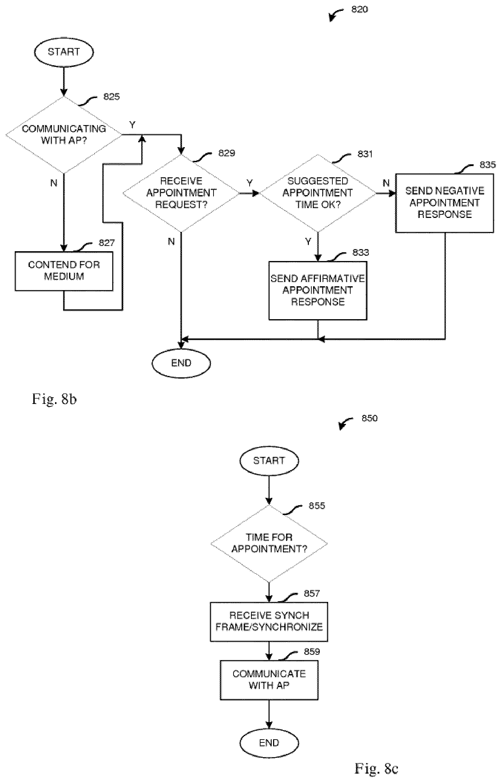

Figure 8b illustrates a flow diagram of operations 820 in a station as the station participates in an appointment setup initiated by an access point. Operations 820 may be indicative of operations occurring in a station, such as stations 110 - 134, as the station participates in an appointment setup initiated by an access point, such as access point 105.

Operations 820 may begin with the station performing a check to determine if it is communicating with an access point (block 825). If the station is not communicating with the access point, the station may contend for ownership of the communications medium (block 827). If the station is communicating with the access point or as the station obtains ownership of the communications medium, then the station may perform a check to determine if it has received an appointment request from the station (block 829). As discussed previously, the appointment request may include a suggested time that the appointment is to begin. The appointment request may also include a duration for the appointment. Furthermore, if the appointment is to be periodic, the appointment request may include an interval between appointments, a frequency of the appointments, a number of appointments, and the like.

The station may perform a check to determine if the suggested time (as well as duration, and interval, frequency, number, and the like, if the appointment is to be a repetitive appointment) is acceptable (block 831). If the suggested time (as well as duration, and interval, frequency, number, and the like, if the appointment is to be a repetitive appointment) is acceptable, the station may send an affirmative appointment response (block 833). If the suggested time (as well as duration, and interval, frequency, number, and the like, if the appointment is to be a repetitive appointment) is not acceptable, the station may send a negative appointment response (block 835). It is noted that in a variant of the example embodiment, the station may send back an alternate to the suggested time (or duration, and interval, frequency, number, and the like, if the appointment is to be a repetitive appointment) in its appointment response.

Figure 8c illustrates a flow diagram of operations 850 in a station as the station synchronizes its clock. Operations 850 may be indicative of operations occurring in a station, such as stations 110 - 134, as the station synchronizes its clock with a clock of an access point, such as access point 105.

Operations 850 may begin with the station performing a check to determine if it is time for an appointment (block 855). In general, the station may check to determine if it is a small amount of time prior to the time of its appointment to allow time for the station to prepare to communicate with the access point. The station may receive a synch frame transmitted by the access point and make use of the synch frame and timing information contained therein to synchronize its clock with the clock of the access point (block 857). The station may communicate with the access point once it is time for the appointment (block 859).

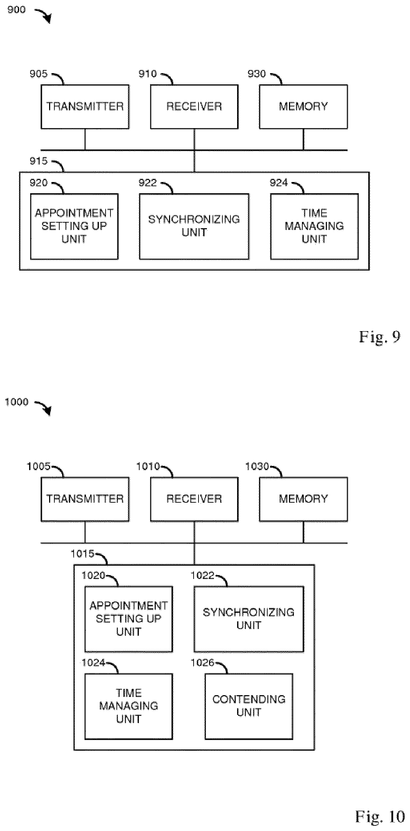

Figure 9 illustrates a diagram of a first communications device 900. Communications device 900 may be an implementation of an access point of a communications system. Communications device 900 may be used to implement various ones of the embodiments discussed herein. As shown in Figure 9, a transmitter 905 is configured to send messages, appointment requests, appointment responses, synch frames, and the like, and a receiver 910 is configured to receive messages, appointment requests, appointment responses, and the like. Transmitter 905 and receiver 910 may have a wireless interface, a wireline interface, or a combination thereof.

An appointment setting up unit 920 is configured to participate in an appointment setup with a station. As an example, appointment setting up unit 920 sends an appointment request to the station and processes a received appointment response from the station. As another example, appointment setting up unit 920 processes an appointment request and sends an appointment response to the station. A synchronizing unit 922 is configured to send synch frames to stations having appointments with communications device 900. Synchronizing unit 922 sends the synch frames a small amount of time before corresponding appointment times. A time managing unit 924 is configured to manage scheduled appointments (including appointment information, such as appointment time, appointment duration, appointment frequency, appointment interval, appointment number, and the like) for the purpose of allocating additional appointments. A memory 930 is configured to store appointment information, stations, synchronization times, and the like.

The elements of communications device 900 may be implemented as specific hardware logic blocks. In an alternative, the elements of communications device 900 may be implemented as software executing in a processor, controller, application specific integrated circuit, or so on. In yet another alternative, the elements of communications device 900 may be implemented as a combination of software and/or hardware.

As an example, transmitter 905 and receiver 910 may be implemented as a specific hardware block, while appointment setting up unit 920, synchronizing unit 922, and time managing unit 924 may be software modules executing in a processor 915, such as a microprocessor, a digital signal processor, a custom circuit, or a custom compiled logic array of a field programmable logic array. Additionally, appointment setting up unit 920, synchronizing unit 922, and time managing unit 924 may be software modules stored in memory 930.

Figure 10 illustrates a diagram of a second communications device 1000. Communications device 1000 may be an implementation of a station of a communications system. Communications device 1000 may be used to implement various ones of the embodiments discussed herein. As shown in Figure 10, a transmitter 1005 is configured to send messages, appointment requests, appointment responses, and the like, and a receiver 1010 is configured to receive messages, appointment requests, appointment responses, synch frames, and the like. Transmitter 1005 and receiver 1010 may have a wireless interface, a wireline interface, or a combination thereof.

An appointment setting up unit 1020 is configured to participate in an appointment setup with a station. As an example, appointment setting up unit 1020 sends an appointment request to the station and processes a received appointment response from the station. As another example, appointment setting up unit 1020 processes an appointment request and sends an appointment response to the station. A synchronizing unit 1022 is configured to process synch frames received from the access point to synchronize a clock of communications device 1000 with the clock of the access point. A time managing unit 1024 is configured to manage scheduled appointments (including appointment information, such as appointment time, appointment duration, appointment frequency, appointment interval, appointment number, and the like) for the purpose of allocating additional appointments. A contending unit 1026 is configured to contend for ownership of the communications medium. A memory 1030 is configured to store appointment information, stations, synchronization times, and the like.

The elements of communications device 1000 may be implemented as specific hardware logic blocks. In an alternative, the elements of communications device 1000 may be implemented as software executing in a processor, controller, application specific integrated circuit, or so on. In yet another alternative, the elements of communications device 1000 may be implemented as a combination of software and/or hardware.

As an example, transmitter 1005 and receiver 1010 may be implemented as a specific hardware block, while appointment setting up unit 1020, synchronizing unit 1022, time managing unit 1024, and contending unit 1026 may be software modules executing in a processor 1015, such as a microprocessor, a digital signal processor, a custom circuit, or a custom compiled logic array of a field programmable logic array. Additionally, appointment setting up unit 1020, synchronizing unit 1022, time managing unit 1024, and contending unit 1026 may be software modules stored in memory 1030.
Although the present disclosure and its advantages have been described in detail, it should be understood that various changes, substitutions and alterations can be made herein without departing from scope of the disclosure as defined by the appended claims.

## Claims

1. A method for operating a station, the method comprising:
scheduling (657), by the station, a first appointment for communicating with an access point at a first time;
entering (659), by the station, a sleep mode after the scheduling the first appointment;
awakening (661), by the station, from the sleep mode prior to the first time in accordance with the scheduled first appointment;
receiving (663), by the station, a synch frame, wherein the synch frame is a synchronization frame and is transmitted by the access point after the awakening of the station and prior to the first time; and synchronizing (663), by the station, a station clock of the station with a clock of the access point in accordance with the synch frame; and communicating (665), by the station, with the access point during the first appointment.

2. The method of claim 1, wherein scheduling (657) the first appointment comprises:
transmitting (809) an appointment request to the access point, the appointment request including appointment information, wherein the appointment information includes at least one of a suggested time for the first appointment, an interval between appointments, a frequency of appointments, and a number of appointments; and
receiving (811) an appointment response from the access point, the appointment response including an affirmative response.

3. The method of claim 2, wherein transmitting the appointment request and receiving the appointment response occur in a second appointment at a second time, wherein the second time occurs prior to the first time.

4. The method of claim 1, wherein scheduling (657) the first appointment comprises:
receiving (829) an appointment request from the access point, the appointment request including appointment information, wherein the appointment information includes at least one of a suggested time for the first appointment, an interval between appointments, a frequency of appointments, and a number of appointments; and
transmitting an appointment response (833, 835) to the access point, the appointment response including an affirmative response.

5. A method for operating an access point, the method comprising:
scheduling (607), by the access point, a first appointment for a station to communicate with the access point at a first time;
transmitting (609), by the access point, a synch frame for the station to synchronize a station clock with an access point clock, wherein the synch frame is a synchronization frame and is transmitted after a time when the station awakens from a sleep mode and prior to the first time; and communicating (611), by the access point, with the station during the first appointment.

6. The method of claim 5, wherein scheduling (607) the first appointment comprises:
transmitting (707) an appointment request to the station, the appointment request including appointment information, wherein the appointment information includes at least one of a suggested time for the first appointment, an interval between appointments, a frequency of appointments, and a number of appointments; and
receiving (709) an appointment response from the station, the appointment response including an affirmative response.

7. The method of claim 6, wherein transmitting the appointment request and receiving the appointment response occur during an association operation between the station and the access point.

8. The method of claim 5, wherein scheduling (607) the first appointment comprises:
receiving (727) an appointment request from the station, the appointment request including appointment information, wherein the appointment information includes at least one of a suggested time for the first appointment, an interval between appointments, a frequency of appointments, and a number of appointments; and
transmitting (731, 733) an appointment response to the station, the appointment response including an affirmative response.

9. A station comprising:
a processor (1015) configured to schedule a first appointment for communicating with an access point at a first time,
put the station in a sleep mode after the first appointment is scheduled,
awaken the station from the sleep mode prior to the first time in accordance with the scheduled first appointment, and
a transmitter (1005) and a receiver (1010) operatively coupled to the processor (1015), wherein the receiver (1010) is configured to receive a synch frame, which is a synchronization frame and is transmitted by the access point after the awakening of the station and prior to the first time, the processor (1015) is further configured to synchronize a station clock of the station with a clock of the access point in accordance with the synch frame; and wherein the transmitter (1005) and the receiver (1010) are configured to communicate with the access point during the first appointment.

10. The station of claim 9, wherein the transmitter (1005) is configured to transmit an appointment request to the access point, the appointment request including appointment information, wherein the appointment information includes at least one of a suggested time for the first appointment, an interval between appointments, a frequency of appointments, and a number of appointments, and wherein the receiver is configured to receive an appointment response from the access point, the appointment response including an affirmative response.

11. The station of claim 9, wherein the receiver (1010) is configured to receive an appointment request from the access point, the appointment request including appointment information, wherein the appointment information includes at least one of a suggested time for the first appointment, an interval between appointments, a frequency of appointments, and a number of appointments, and wherein the transmitter is configured to transmit an appointment response to the access point, the appointment response including an affirmative response.

12. An access point comprising:
a processor (915) configured to schedule a first appointment for a station to communicate with the access point at a first time;
a receiver (910) and a transmitter (905) operatively coupled to the processor, wherein the transmitter (905) is configured to transmit a synch frame for the station to synchronize a station clock with an access point clock, wherein the synch frame is a synchronization frame and is transmitted after a time when the station awakens from a sleep mode and prior to the first time; and wherein the receiver (910) and the transmitter (905) are configured to communicate with the station during the first appointment.

13. The access point of claim 12, wherein the transmitter (905) configured to transmit an appointment request to the station, the appointment request including appointment information, wherein the appointment information includes at least one of a suggested time for the first appointment, an interval between appointments, a frequency of appointments, and a number of appointments, and wherein the receiver is configured to receive an appointment response from the station, the appointment response including an affirmative response.

14. The access point of claim 12, wherein the receiver (910) is configured to receive an appointment request from the station, the appointment request including appointment information, wherein the appointment information includes at least one of a suggested time for the first appointment, an interval between appointments, a frequency of appointments, and a number of appointments, and wherein the transmitter is configured to transmit an appointment response to the station, the appointment response including an affirmative response.

## Patentansprüche

1. Verfahren zum Betreiben einer Station, wobei das Verfahren umfasst:
Planen (657) eines ersten Termins durch die Station zum Kommunizieren mit einem Zugangspunkt zu einer ersten Zeit;
Eintreten (659) in einen Ruhemodus durch die Station nach dem Planen des ersten Termins;
Erwachen (661) aus dem Ruhemodus durch die Station vor der ersten Zeit gemäß dem geplanten ersten Termin;
Empfangen (663) eines "Synch-Frames" durch die Station, wobei der "Synch-Frame" ein Synchronisationsrahmen ist und nach dem Erwachen der Station und vor der ersten Zeit durch den Zugangspunkt gesendet wird; und Synchronisieren (663) eines Stationstaktes der Station durch die Station mit einem Takt des Zugangspunkts gemäß dem "Synch-Frame"; und Kommunizieren (665) mit dem Zugangspunkt durch die Station während des ersten Termins.

2. Verfahren nach Anspruch 1, wobei das Planen (657) des ersten Termins umfasst:
Senden (809) einer Terminanforderung an den Zugangspunkt, wobei die Terminanforderung Termininformationen umfasst, wobei die Termininformationen mindestens eines aus einer vorgeschlagenen Zeit für den ersten Termin, einem Intervall zwischen Terminen, einer Häufigkeit von Terminen und einer Anzahl von Terminen umfassen; und
Empfangen (811) einer Terminantwort von dem Zugangspunkt, wobei die Terminantwort eine bestätigende Antwort umfasst.

3. Verfahren nach Anspruch 2, wobei das Senden der Terminanforderung und das Empfangen der Terminantwort in einem zweiten Termin zu einer zweiten Zeit erfolgen, wobei die zweite Zeit vor der ersten Zeit erfolgt.

4. Verfahren nach Anspruch 1, wobei das Planen (657) des ersten Termins umfasst:
Empfangen (829) einer Terminanforderung von dem Zugangspunkt, wobei die Terminanforderung Termininformationen umfasst, wobei die Termininformationen mindestens eines aus einer vorgeschlagenen Zeit für den ersten Termin, einem Intervall zwischen Terminen, einer Häufigkeit von Terminen und einer Anzahl von Terminen umfassen; und
Senden einer Terminantwort (833, 835) an den Zugangspunkt, wobei die Terminantwort eine bestätigende Antwort umfasst.

5. Verfahren zum Betreiben eines Zugangspunkts, wobei das Verfahren umfasst:
Planen (607) eines ersten Termins durch den Zugangspunkt für eine Station zum Kommunizieren mit dem Zugangspunkt zu einer ersten Zeit;
Senden (609) eines "Synch-Frame" für die Station durch den Zugangspunkt zum Synchronisieren eines Stationstaktes mit einem Zugangspunkttakt, wobei der "Synch-Frame" ein Synchronisationsrahmen ist und nach einer Zeit, wenn die Station aus einem Ruhemodus erwacht, und vor der ersten Zeit gesendet wird; und
Kommunizieren (611) mit der Station durch den Zugangspunkt während des ersten Termins.

6. Verfahren nach Anspruch 5, wobei das Planen (607) des ersten Termins umfasst:
Senden (707) einer Terminanforderung an die Station, wobei die Terminanforderung Termininformationen umfasst, wobei die Termininformationen mindestens eines aus einer vorgeschlagenen Zeit für den ersten Termin, einem Intervall zwischen Terminen, einer Häufigkeit von Terminen und einer Anzahl von Terminen umfassen; und
Empfangen (709) einer Terminantwort von der Station, wobei die Terminantwort eine bestätigende Antwort umfasst.

7. Verfahren nach Anspruch 6, wobei das Senden der Terminanforderung und das Empfangen der Terminantwort während einer Assoziationsoperation zwischen der Station und dem Zugangspunkt erfolgen.

8. Verfahren nach Anspruch 5, wobei das Planen (607) des ersten Termins umfasst:
Empfangen (727) einer Terminanforderung von der Station, wobei die Terminanforderung Termininformationen umfasst, wobei die Termininformationen mindestens eines aus einer vorgeschlagenen Zeit für den ersten Termin, einem Intervall zwischen Terminen, einer Häufigkeit von Terminen und einer Anzahl von Terminen umfassen; und
Senden (731, 733) einer Terminantwort an die Station, wobei die Terminantwort eine bestätigende Antwort umfasst.

9. Station, umfassend:
einen Prozessor (1015), der dafür konfiguriert ist, einen ersten Termin zum Kommunizieren mit einem Zugangspunkt zu einer ersten Zeit zu planen,
die Station in einen Ruhemodus zu bringen, nachdem der erste Termin geplant ist,
die Station vor der ersten Zeit gemäß dem geplanten ersten Termin aus dem Ruhemodus erwachen zu lassen und
einen Sender (1005) und einen Empfänger (1010), die operativ mit dem Prozessor (1015) verbunden sind, wobei der Empfänger (1010) dafür konfiguriert ist, einen "Synch-Frame" zu empfangen, welcher ein Synchronisationsrahmen ist und nach dem Erwachen der Station und vor der ersten Zeit durch den Zugangspunkt gesendet wird, der Prozessor (1015) ferner dafür konfiguriert ist, gemäß dem "Synch-Frame" einen Stationstakt der Station mit einem Takt des Zugangspunkts zu synchronisieren; und wobei der Sender (1005) und der Empfänger (1010) dafür konfiguriert sind, während des ersten Termins mit dem Zugangspunkt zu kommunizieren.

10. Station nach Anspruch 9, wobei der Sender (1005) dafür konfiguriert ist, eine Terminanforderung an den Zugangspunkt zu senden, wobei die Terminanforderung Termininformationen umfasst, wobei die Termininformationen mindestens eines aus einer vorgeschlagenen Zeit für den ersten Termin, einem Intervall zwischen Terminen, einer Häufigkeit von Terminen und einer Anzahl von Terminen umfassen und wobei der Empfänger dafür konfiguriert ist, eine Terminantwort von dem Zugangspunkt zu empfangen, wobei die Terminantwort eine bestätigende Antwort umfasst.

11. Station nach Anspruch 9, wobei der Empfänger (1010) dafür konfiguriert ist, eine Terminanforderung von dem Zugangspunkt zu empfangen, wobei die Terminanforderung Termininformationen umfasst, wobei die Termininformationen mindestens eines aus einer vorgeschlagenen Zeit für den ersten Termin, einem Intervall zwischen Terminen, einer Häufigkeit von Terminen und einer Anzahl von Terminen umfassen und wobei der Sender dafür konfiguriert ist, eine Terminantwort an den Zugangspunkt zu senden, wobei die Terminantwort eine bestätigende Antwort umfasst.

12. Zugangspunkt, umfassend:
einen Prozessor (915), der dafür konfiguriert ist, einen ersten Termin für eine Station zum Kommunizieren mit dem Zugangspunkt zu einer ersten Zeit zu planen;
einen Empfänger (910) und einen Sender (905), die operativ mit dem Prozessor verbunden sind, wobei der Sender (905) dafür konfiguriert ist, einen "Synch-Frame" für die Station zu senden, um einen Stationstakt mit einem Zugangspunkttakt zu synchronisieren, wobei der "Synch-Frame" ein Synchronisationsrahmen ist und nach einer Zeit, wenn die Station aus einem Ruhemodus erwacht, und vor der ersten Zeit gesendet wird und wobei der Empfänger (910) und der Sender (905) dafür konfiguriert sind, während des ersten Termins mit der Station zu kommunizieren.

13. Zugangspunkt nach Anspruch 12, wobei der Sender (905) dafür konfiguriert ist, eine Terminanforderung an die Station zu senden, wobei die Terminanforderung Termininformationen umfasst, wobei die Termininformationen mindestens eines aus einer vorgeschlagenen Zeit für den ersten Termin, einem Intervall zwischen Terminen, einer Häufigkeit von Terminen und einer Anzahl von Terminen umfassen und wobei der Empfänger dafür konfiguriert ist, eine Terminantwort von der Station zu empfangen, wobei die Terminantwort eine bestätigende Antwort umfasst.

14. Zugangspunkt nach Anspruch 12, wobei der Empfänger (910) dafür konfiguriert ist, eine Terminanforderung von der Station zu empfangen, wobei die Terminanforderung Termininformationen umfasst, wobei die Termininformationen mindestens eines aus einer vorgeschlagenen Zeit für den ersten Termin, einem Intervall zwischen Terminen, einer Häufigkeit von Terminen und einer Anzahl von Terminen umfassen und wobei der Sender dafür konfiguriert ist, eine Terminantwort an die Station zu senden, wobei die Terminantwort eine bestätigende Antwort umfasst.

## Revendications

1. Procédé de fonctionnement d'une station, lequel procédé consiste à :
- programmer (657), par la station, un premier rendez-vous pour communiquer avec un point d'accès à un premier moment ;
- passer (659), par la station, en un mode de veille après avoir programmé le premier rendez-vous ;
- effectuer un réveil (661), par la station, du mode de veille avant le premier moment en fonction du premier rendez-vous programmé ;
- recevoir (663), par la station, une trame synch, laquelle trame synch est une trame de synchronisation et est transmise par le point d'accès après le réveil de la station et avant le premier moment ; et synchroniser (663), par la station, une horloge de station de la station avec une horloge du point d'accès en fonction de la trame synch ; et communiquer (665), par la station, avec le point d'accès pendant le premier rendez-vous.

2. Procédé selon la revendication 1, dans lequel la programmation (657) du premier rendez-vous consiste à :
- transmettre (809) une demande de rendez-vous au point d'accès, la demande de rendez-vous comprenant des informations de rendez-vous et les informations de rendez-vous comprenant l'un au moins d'un moment suggéré pour le premier rendez-vous, d'un intervalle entre les rendez-vous, d'une fréquence des rendez-vous et d'un nombre de rendez-vous ; et
- recevoir (811) une réponse de rendez-vous du point d'accès, la réponse de rendez-vous comprenant une réponse affirmative.

3. Procédé selon la revendication 2, dans lequel la transmission de la demande de rendez-vous et la réception de la réponse de rendez-vous se produisent dans un second rendez-vous à un second moment, le second moment se produisant avant le premier moment.

4. Procédé selon la revendication 1, dans lequel la programmation (657) du premier rendez-vous consiste à :
- recevoir (829) une demande de rendez-vous du point d'accès, la demande de rendez-vous comprenant des informations de rendez-vous et les informations de rendez-vous comprenant l'un au moins d'un moment suggéré pour le premier rendez-vous, d'un intervalle entre des rendez-vous, d'une fréquence des rendez-vous et d'un nombre de rendez-vous ; et
- transmettre une réponse de rendez-vous (833, 835) au point d'accès, la réponse de rendez-vous comprenant une réponse affirmative.

5. Procédé de fonctionnement d'un point d'accès, consistant à :
- programmer (607), par le point d'accès, un premier rendez-vous pour qu'une station communique avec le point d'accès à un premier moment ;
- transmettre (609), par le point d'accès, une trame synch pour que la station synchronise une horloge de station avec une horloge de point d'accès, laquelle trame synch est une trame de synchronisation et est transmise après un moment où la station se réveille d'un mode de veille et avant le premier moment ; et
- communiquer (611), par le point d'accès, avec la station pendant le premier rendez-vous.

6. Procédé selon la revendication 5, dans lequel la programmation (607) du premier rendez-vous consiste à :
- transmettre (707) une demande de rendez-vous à la station, la demande de rendez-vous comprenant des informations de rendez-vous et les informations de rendez-vous comprenant l'un au moins d'un moment suggéré pour le premier rendez-vous, d'un intervalle entre des rendez-vous, d'une fréquence des rendez-vous et d'un nombre de rendez-vous ; et
- recevoir (709) une réponse de rendez-vous de la station, la réponse de rendez-vous comprenant une réponse affirmative.

7. Procédé selon la revendication 6, dans lequel la transmission de la demande de rendez-vous et la réception de la réponse de rendez-vous se produisent pendant une opération d'association entre la station et le point d'accès.

8. Procédé selon la revendication 5, dans lequel la programmation (607) du premier rendez-vous consiste à :
- recevoir (727) une demande de rendez-vous de la station, la demande de rendez-vous comprenant des informations de rendez-vous et les informations de rendez-vous comprenant l'un au moins d'un moment suggéré pour le premier rendez-vous, d'un intervalle entre des rendez-vous, d'une fréquence des rendez-vous et d'un nombre de rendez-vous ; et
- transmettre (731, 733) une réponse de rendez-vous à la station, la réponse de rendez-vous comprenant une réponse affirmative.

9. Station comprenant :
- un processeur (1015) conçu pour programmer un premier rendez-vous pour communiquer avec un point d'accès à un premier moment ;
mettre la station en mode de veille après la programmation du premier rendez-vous ; réveiller la station du mode de veille avant le premier moment en fonction du premier rendez-vous programmé ; et
- un émetteur (1005) et un récepteur (1010) couplés fonctionnellement au processeur (1015), lequel récepteur (1010) est conçu pour recevoir une trame synch, qui est une trame de synchronisation et est transmise par le point d'accès après le réveil de la station et avant le premier moment, le processeur (1015) étant en outre conçu pour synchroniser une horloge de station de la station avec une horloge du point d'accès en fonction de la trame synch ; et que l'émetteur (1005) et le récepteur (1010) étant conçus pour communiquer avec le point d'accès pendant le premier rendez-vous.

10. Station selon la revendication 9, dans laquelle l'émetteur (1005) est conçu pour transmettre une demande de rendez-vous au point d'accès, la demande de rendez-vous comprenant des informations de rendez-vous et les informations de rendez-vous comprenant l'un au moins d'un moment suggéré pour le premier rendez-vous, d'un intervalle entre les rendez-vous, d'une fréquence des rendez-vous et d'un nombre de rendez-vous, et dans laquelle le récepteur est conçu pour recevoir une réponse de rendez-vous du point d'accès, la réponse de rendez-vous comprenant une réponse affirmative.

11. Station selon la revendication 9, dans laquelle le récepteur (1010) est conçu pour recevoir une demande de rendez-vous du point d'accès, la demande de rendez-vous comprenant des informations de rendez-vous et les informations de rendez-vous comprenant l'un au moins d'un moment suggéré pour le premier rendez-vous, d'un intervalle entre des rendez-vous, d'une fréquence des rendez-vous et d'un nombre de rendez-vous, et dans laquelle l'émetteur est conçu pour transmettre une réponse de rendez-vous au point d'accès, la réponse de rendez-vous comprenant une réponse affirmative.

12. Point d'accès comprenant :
- un processeur (915) conçu pour programmer un premier rendez-vous pour qu'une station communique avec le point d'accès à un premier moment ;
- un récepteur (910) et un émetteur (905) couplés fonctionnellement au processeur, lequel émetteur (905) est conçu pour transmettre une trame synch pour que la station synchronise une horloge de station avec une horloge de point d'accès, laquelle trame synch est une trame de synchronisation et est transmise après un moment où la station se réveille d'un mode de veille et avant le premier moment ; et dans lequel le récepteur (910) et l'émetteur (905) sont conçus pour communiquer avec la station lors du premier rendez-vous.

13. Point d'accès selon la revendication 12, dans lequel l'émetteur (905) est conçu pour transmettre une demande de rendez-vous à la station, la demande de rendez-vous comprenant des informations de rendez-vous et les informations de rendez-vous comprenant l'un au moins d'un moment suggéré pour le premier rendez-vous, d'un intervalle entre des rendez-vous, d'une fréquence des rendez-vous et d'un nombre de rendez-vous, et dans lequel le récepteur est conçu pour recevoir une réponse de rendez-vous de la station, la réponse de rendez-vous comprenant une réponse affirmative.

14. Point d'accès selon la revendication 12, dans lequel le récepteur (910) est conçu pour recevoir une demande de rendez-vous de la station, la demande de rendez-vous comprenant des informations de rendez-vous et les informations de rendez-vous comprenant l'un au moins d'un moment suggéré pour le premier rendez-vous, d'un intervalle entre des rendez-vous, d'une fréquence des rendez-vous et d'un nombre de rendez-vous, et dans lequel l'émetteur est conçu pour transmettre une réponse de rendez-vous à la station, la réponse de rendez-vous comprenant une réponse affirmative.
